# EUROPÄISCHE PATENTSCHRIFT

(11) **EP 2 420 062 B1**
(45) Veröffentlichungstag und Bekanntmachung des Hinweises auf die Patenterteilung: **03.07.2013**
(21) Anmeldenummer: 10715783.6
(22) Anmeldetag: 14.04.2010
(51) Int. Cl.: H04N 7/26

(54) **ERKENNUNG EINER ÄNDERUNG ZWISCHEN BILDERN ODER IN EINER SEQUENZ VON BILDERN**
DETECTION OF A CHANGE BETWEEN IMAGES OR IN A SEQUENCE OF IMAGES
DÉTECTION D'UN CHANGEMENT ENTRE IMAGES OU DANS UNE SÉQUENCE D'IMAGES

(30) Priorität: 15.04.2009 DE 102009017436
(43) Veröffentlichungstag der Anmeldung: 22.02.2012
(73) Patentinhaber: Fraunhofer-Gesellschaft zur Förderung der angewandten Forschung e.V., 80686 München (DE)
(72) Erfinder: SCHÖBERL, Michael, 91058 Erlangen (DE); KAUP, André, 91090 Effeltrich (DE)
(74) Vertreter: Schenk, Markus
(86) Internationale Anmeldenummer: PCT/EP2010/054885
(87) Internationale Veröffentlichungsnummer: WO 2010/119060

(56) Entgegenhaltungen:
- US-A1- 2005 280 739
- TABESH A ET AL: "JPEG2000 and Motion JPEG2000 Content Analysis Using Codestream Length Information" DATA COMPRESSION CONFERENCE, 2005. PROCEEDINGS. DCC 2005 SNOWBIRD, UT, USA 29-31 MARCH 2005, PISCATAWAY, NJ, USA,IEEE LNKD- DOI:10.1109/DCC.2005.48, 29. März 2005 (2005-03-29), Seiten 329-337, XP010782784 ISBN: 978-0-7695-2309-5
- ZARGARI F ET AL: "Compressed domain JPEG2000 image indexing method employing full packet header information" CONTENT-BASED MULTIMEDIA INDEXING, 2008. CBMI 2008. INTERNATIONAL WORKSHOP ON, IEEE, PISCATAWAY, NJ, USA, 18. Juni 2008 (2008-06-18), Seiten 410-416, XP031286394 ISBN: 978-1-4244-2043-8
- HATA N KUWAHARA MITSUBISHI ELECTRIC CORP (JAPAN) T ET AL: "Surveillance system with mega-pixel scalable transcoder" VISUAL COMMUNICATIONS AND IMAGE PROCESSING; 30-1-2007 - 1-2-2007; SAN JOSE,, 30. Januar 2007 (2007-01-30), XP030081127
- CHIH-WEI TANG ED - YO-SUNG HO ET AL: "Motion Perception Based Adaptive Quantization for Video Coding" 1. Januar 2005 (2005-01-01), ADVANCES IN MULITMEDIA INFORMATION PROCESSING - PCM 2005 LECTURE NOTES IN COMPUTER SCIENCE;;LNCS, SPRINGER, BERLIN, DE, PAGE(S) 132 - 143 , XP019023953 ISBN: 978-3-540-30027-4 * Zusammenfassung Seite 135, Zeilen 8-10 Seite 142, Zeilen 8-11
- SCHOEBERL M ET AL: "Change detection in JPEG 2000 compressed video" THE INSTITUTION OF ENGINEERING AND TECHNOLOGY. JOURNAL,, Bd. 46, Nr. 6, 18. März 2010 (2010-03-18), Seiten 409-411, XP006035287 ISSN: 1350-911X

## Beschreibung

Die vorliegende Erfindung bezieht sich auf eine Erkennung einer Änderung zwischen Bildern, wie z.B. zur Objekterkennung oder -verfolgung in der Videoüberwachung, zur Szenenwechselerkennung, zur psycho-optischen Anpassung des Datenraten-/Qualitäts-Verhältnisses von codierten Videoströmen, zur effizienten Speicherung von Videodaten, zur Rauschreduzierung oder dergleichen.

Ein wichtiger Schritt bei der Verarbeitung von Videosequenzen ist die Erkennung von Änderungen von einem Bild zum nächsten und dabei häufig auch die Zuordnung der Änderungen zu einem bestimmten Bildbereich. Daraus lassen sich weitere Verarbeitungsschritte, wie z.B. für die Objekterkennung und -verfolgung steuern.

Mit der zunehmend steigenden Auflösung der Bilder ist eine Übertragung oder Speicherung von Videosequenzen häufig nur in komprimierter Form praktikabel. Dies spart deutlich an benötigter Übertragungsrate über Funk oder Kabel, an Speicherplatz und ebenso Datenrate beim Laden oder Speichern von Dateien. Ein häufig eingesetzter Standard für diese Anwendungen ist beispielsweise JPEG2000. Er bietet Vorteile bei hohen Bildqualitäten und bietet einen sehr flexiblen Zugriff auf Bildteile, was man auch manchmal als Skalierbarkeit bezeichnet. Wenn nur ein Ausschnitt eines Bildes benötigt wird, dann ist die Dekompression für einen Teil des Bildes mit deutlich geringerem Rechenaufwand möglich.

Um eine Erkennung von Änderungen durchzuführen, ist es bisher jedoch nötig, die Bilder zunächst vollständig zu dekomprimieren. Erst dann kann ein Algorithmus zur Erkennung von Änderungen auf der Basis der decodierten Bildpunkte angewendet werden. Eine Beurteilung darüber, welcher Bildbereich benötigt wird, ist vor einer Decodierung bisher nicht möglich. Besonders bei hoch auflösenden und komprimierten Bildern, wie z.B. JPEG2000-Bildern, erfordert dies viel Rechenzeit.

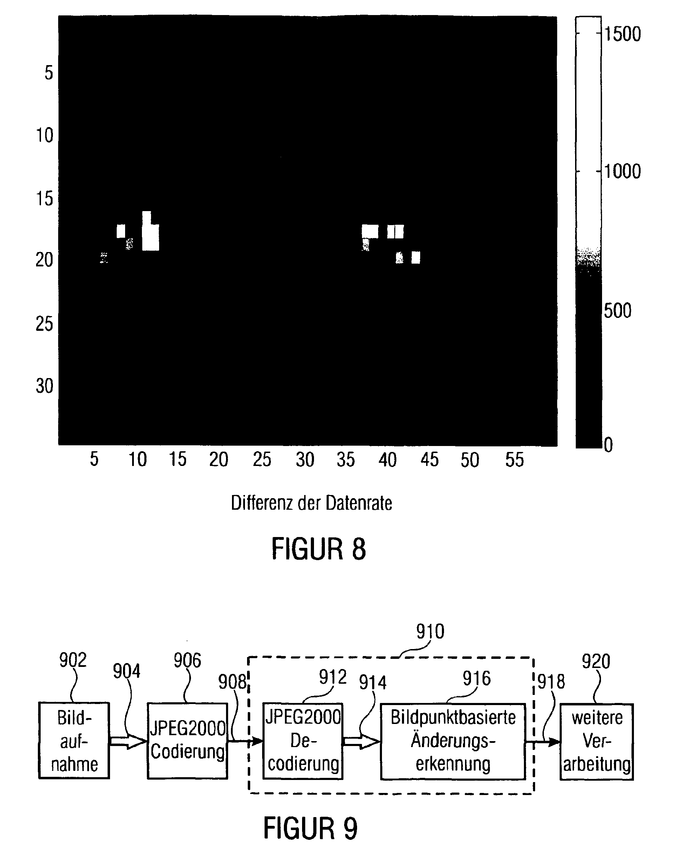

Wie erwähnt ist es für die Erkennung von Änderungen in Bildsequenzen möglich, das komplette Bildmaterial vollständig zu dekomprimieren. Dies ist in Figur 9 gezeigt. Aus einer Bildaufnahmevorrichtung 902 stammende Bilder einer Sequenz von Bildern 904 werden von einem JPEG2000-Codierer 906 einzeln bzw. individuell, d.h. jedes Bild für sich in abgeschlossener und von den anderen Bilder unabhängiger Art und Weise, zu einer Sequenz von codierten Bildern 908 codiert und dann in einem Block 910 einer Änderungserkennung unterzogen, wobei dieser Block allerdings einen JPEG2000-Decodierer 912 aufweist, um jedes Bild der ankommenden Sequenz 908 von codierten Bildern wieder vollständig zu decodieren, um eine Rekonstruktion 914 der Sequenz von Bildern 904 zu erhalten, an der wiederum ein Subblock 916 des Änderungserkennungsblocks 910 eine bildpunktbasierte Änderungserkennung zwischen aufeinander folgenden Bildern durchführt, um das Ergebnis, d.h. die erkannten Änderungen 918, an einen sich anschließenden weiteren Verarbeitungsblock 920 auszugeben. Die Algorithmen, die zur bildpunktbasierten Änderungserkennung in dem Block 916 verwendet werden können, um eine Erkennung von geänderten Bereichen festzustellen, sind beispielsweise in T. Aach und A. Kaup: Bayesian algorithms for change detection in image sequences using Markov random fields. Signal Processing: Image Communication, 7: 147-160, 1995, beschrieben. In dem Fall von komprimierten und hochauflösenden codierten Sequenzen 908 ist eine Echtzeit-Verarbeitung bei der Änderungserkennung 910 kaum möglich. Eine Alternative ist eine Durchführung der Änderungssuche 910 erst nach einer Speicherung des codierten Bildmaterials 908. In diesem Fall benötigt die Änderungssuche im gespeicherten Bildmaterial jedoch viel Rechenzeit. Eine Offline-Bearbeitung einer gespeicherten Version des Bildmaterials mit voller Auflösung ist aufgrund des hierzu benötigten Speicherplatzes sowie der auftretenden Latenzzeiten bei der Speicherung bzw. bei den Speicherzugriffen problematisch.

Eine Methode zur Bildklassifizierung und Szenenwechselerkennung zwischen aufeinanderfolgenden Bildern im codierten Bereich findet sich in Tabesh A. et al: "JPEG2000 and Motion JPEG2000 Content Analysis Using Codestream Length Information", Proceedings of the Data Compression Conference DCC 2005, Snowbird, UT, USA, 29-31 März 2005, Seiten 329-337, ISBN: 978-0-7695-2309-5. Dieses Verfahren basiert auf der Analyse und dem Vergleich der Anzahl von Bytes, die ein JPEG-2000-Entropiecodierer zur Codierung der einzelnen Teilbänder aufwendet, so dass keine Decodierung notwendig ist. Insbesondere werden bei dieser Methode zunächst die Längen aller Codeblöcke innerhalb eines Teilbandes aufsummiert, um dessen Informationsgehalt zu ermitteln, und die daraus für alle Teilbänder resultierenden Werte zur Bestimmung eines Maßes zur globalen Bildänderung verwendet.

Wünschenswert wäre deshalb eine effizientere Erkennung von Änderungen zwischen Bildern.

Die Aufgabe der vorliegenden Erfindung besteht darin, ein solches effizienteres Konzept zur Erkennung von Änderungen zwischen Bildern zu schaffen.

Diese Aufgabe wird durch eine Vorrichtung gemäß Anspruch 1 und ein Verfahren gemäß Anspruch 14 gelöst.

Die Erkenntnis der vorliegenden Erfindung besteht darin, dass eine Erkennung einer Änderung zwischen Bildern effektiver durchgeführt werden kann, wenn zur Erkennung ein Änderungsmaß verwendet wird, das von einer Länge der Code-Blöcke abhängt, zu denen die Bilder individuell entropiecodiert sind, und die unterschiedlichen Abschnitten des jeweiligen Bildes zugeordnet sind, da die Länge dieser Code-Blöcke auch ohne Decodierung zur Verfügung steht. Die Erfindung macht sich zunutze, dass die Länge bzw. die Menge der Daten eines Code-Blocks direkt größtenteils abhängig von der Entropie und damit von der Komplexität des zugeordneten Bildabschnitts ist, und dass sich Änderungen zwischen Bildern mit hoher Wahrscheinlichkeit auch in einer Änderung der Komplexität niederschlagen.

Gemäß einem Ausführungsbeispiel der vorliegenden Erfindung entsprechen die Code-Blöcke entropiecodierten Versionen von Wavelettransformationsblöcken und das Bestimmen des Änderungsmaßes umfasst ein Aufsummieren - für Bildeinheitsbereiche, in die das jeweilige Bild unterteilt ist - der Längen derjeniger Code-Blöcke, die sich gemäß der Wavelet-Transformation auf einen Bildabschnitt beziehen, der mit dem jeweiligen Bildeinheitsbereich überlappt, und zwar auf eine gewichtete Weise, die die jeweilige Wavelettransformationsstufe berücksichtigt. Die gemischt ort- und zeitauflösende Eigenschaft der Wavelet-Transformation ermöglicht es, auf Basis der erhaltenen aufsummierten Werte die Abweichung zwischen den Bildern ortsaufgelöst über eine Abweichung zwischen den aufsummierten Werten einander korrespondierender Bildeinheitsbereiche der beiden Bilder zu bestimmen. Zusätzlich ist es möglich, in diesem Fall eine Decodierung nur für diejenigen Bildabschnitte bzw. nur auf Basis derjenigen Code-Blöcke durchzuführen, die sich auf die Orte beziehen, an denen Änderungen festgestellt wurden. Je nach Anwendungsfall kann es auch sinnvoll sein, eine besondere Verarbeitung an denjenigen Stellen der Bilder durchzuführen, an denen das Maß einer Änderung einen vorbestimmten Schwellwert nicht überschreitet.

Bevorzugte Ausführungsbeispiele der vorliegenden Erfindung werden nachfolgend Bezug nehmend auf die beiliegenden Zeichnungen näher erläutert. Es zeigen:
- Fig. 1: ein Blockschaltbild eines Systems zur Verarbeitung von codierten Bildern auf Basis einer Änderungserkennung gemäß einem Ausführungsbeispiel;
- Fig. 2: ein schematisches Diagramm zur Veranschaulichung einer wavelettransformationsbasierten Codierung mit Entropie-Codierung von Wavelettransformationskoeffizientenblöcken zu Code-Blöcken variabler Länge gemäß einem Ausführungsbeispiel;
- Fig. 3: ein schematisches Blockschaltbild zur Veranschaulichung der durchzuführenden Schritte für eine Änderungserkennung zwischen zwei aufeinander folgenden Bildern gemäß einem Ausführungsbeispiel;
- Fig. 4: ein Blockschaltbild einer Videoüberwachungsvorrichtung mit einer Änderungserkennung gemäß einem Ausführungsbeispiel;
- Fig. 5: ein Blockschaltbild einer Vorrichtung zur Transcodierung von Bildern einer Bildsequenz mit einer Änderungserkennung gemäß einem Ausführungsbeispiel;
- Fig. 6a,b: exemplarische zu vergleichende Bilder;
- Fig. 7a,b: die lokale Datenrate über die Bilder der Figur 6a bzw. Figur 6b hinweg;
- Fig. 8: eine Differenz der örtlichen Datenratenverteilungen der Figuren 7a und 7b; und
- Fig. 9: ein Blockschaltbild eines Systems mit einer Änderungserkennung mit vollständiger Codierung der Bilder, zwischen denen eine Änderung zu erkennen ist.

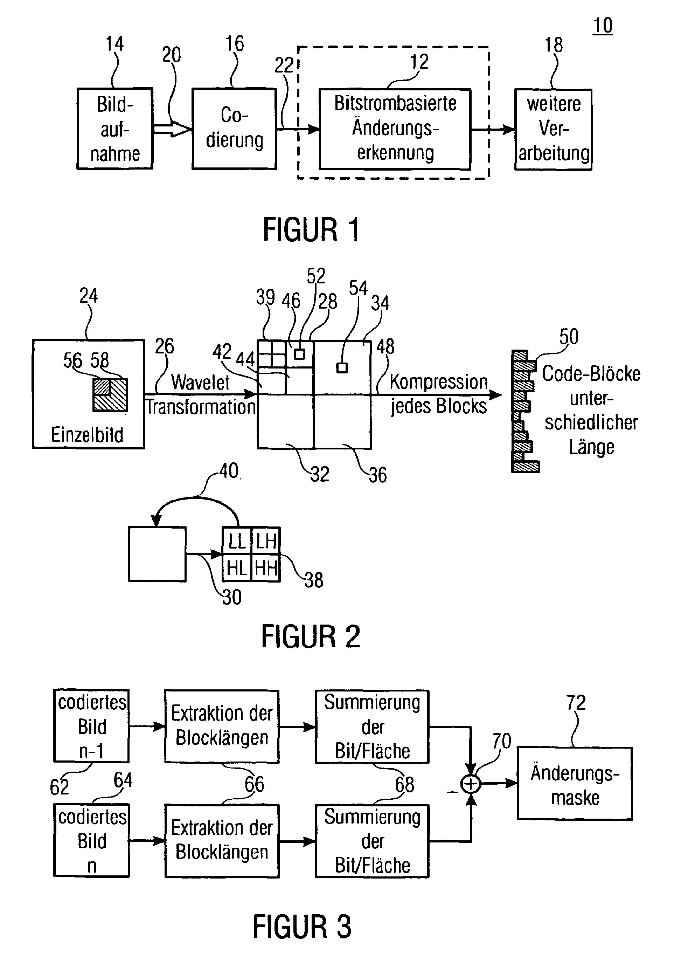

Figur 1 zeigt ein System 10 zur Verarbeitung von Bildern mit einer Vorrichtung 12 zur Änderungserkennung bzw. einer Änderungserkennung gemäß einem Ausführungsbeispiel der vorliegenden Erfindung. Das System 10 umfasst neben der Änderungserkennungsvorrichtung 12 eine Bildaufnahmevorrichtung 14, einen Codierer 16 und einen Block 18, der stellvertretend für weitere Bildbearbeitungen steht, wie es im Folgenden noch beschrieben wird. Das System 10 von Fig. 1 steht lediglich exemplarisch für ein System, bei welchem eine Änderungserkennung gemäß Ausführungsbeispielen der vorliegenden Erfindung, wie sie im Folgenden näher beschrieben werden wird, verwendet werden kann. Weitere Beispiele werden im Folgenden beschrieben.

Bei dem System 10 von Figur 1 erzeugt die Bildaufnahmevorrichtung 14 eine Sequenz 20 von Bildern. Der Codierer 16 ist ausgebildet, um die eingehenden Bilder individuell zu Code-Blöcken zu komprimieren. Anders ausgedrückt bearbeitet der Codierer 16 jedes Bild der Sequenz 20 einzeln, indem derselbe die Bilder individuell so zu Code-Blöcken entropiecodiert, dass die Code-Blöcke unterschiedlichen Abschnitten des jeweiligen Bildes zugeordnet sind. Der Codierer 16 kann beispielsweise die Bilder blockweise einer Spektralzerlegung, wie z.B. einer DCT oder dergleichen, durchführen, um für jeden solchen Pixelblock eines jeweiligen Bildes der Sequenz 20 einen Block von Transformations-koeffizienten zu erhalten, der dann zu einem der genannten Code-Blöcke entropiecodiert wird, wie z.B. durch variable-Länge-Codierung, wie z.B. Huffman-Codierung oder arithmetische Codierung. Die Abschnitte, auf die sich die einzelnen Code-Blöcke beziehen, könnten in diesem Fall direkt aneinandergrenzen und nicht überlappend sein.

Alternativ - und diese Ausführungsform wird in den folgenden Ausführungsbeispielen exemplarisch näher veranschaulicht - könnte die Codierung 16 auch eine Wavelet-Transformation der einzelnen Bilder der eingehenden Sequenz 20 umfassen, deren Ergebnis, d.h. die Wavelet-Transformierte, in Blöcke von Wavelet-Transformationskoeffizienten untergliedert wird, die wiederum einzeln zu Code-Blöcken unterschiedlicher Länge entropiecodiert werden und sich damit - je nach Subband bzw. Transformationsstufe - auf unterschiedliche und insbesondere auch unterschiedlich große Abschnitte des jeweiligen Bildes beziehen. Dabei kann die Codierung des Codierers 16 sowohl verlustbehaftet als auch verlustfrei sein. Wenn die Codierung verlustbehaftet ist, kann der Verlust durch eine Quantisierung der Transformationskoeffizienten vor ihrer Entropie-Codierung in Transformationskoeffizientenblöcken bewirkt sein, und/oder durch Abschneiden von Enden der durch die Entropiekodierung erzeugten Codeblöcke, wie z.B. zur Coderateneinstellung. Insbesondere kann es sich bei der Codierung, die von dem Codierer 16 durchgeführt wird, um eine JPEG2000-Codierung handeln.

Der Codierer 16 gibt die einzelnen, jedes für sich codierten Bilder als Sequenz 22 an die Änderungserkennungsvorrichtung 12 aus. Die Änderungserkennungsvorrichtung 12 ist dazu ausgebildet, eine Änderung zwischen Bildern der Sequenz 22 zu erkennen, wobei die Vorrichtung dazu ein Maß für die Änderung verwendet, das von einer Länge der Code-Blöcke abhängt. Die Änderungserkennung kann auf Paare von unmittelbar aufeinander folgenden Bildern beschränkt werden. Es können aber auch Bilder verglichen werden, zwischen denen zeitlich auch andere Bilder in der Sequenz 20 liegen.

Da die Code-Blöcke entropiecodiert sind, ist es möglich, die Länge der Code-Blöcke als ein Maß für die Komplexität der Bilder zu verwenden, und da die Code-Blöcke sogar unterschiedlichen Abschnitten des jeweiligen Bildes zugeordnet sind, ist es möglich, die Komplexität der Bilder, zwischen denen Änderungen zu erkennen sind, ortsaufgelöst zu bestimmen und Änderungen dieser Komplexitäten ortsaufgelöst zu erkennen. Eine Decodierung innerhalb der Änderungserkennungsvorrichtung 12 ist nicht erforderlich. Die Änderungserkennungsvorrichtung 12 gibt ihr Ergebnis, d.h. die Änderung zwischen den Bildern, an die Verarbeitungsvorrichtung 18 für eine weitere Verarbeitung aus, wobei die Verarbeitungsvorrichtung 18 beispielsweise auf Basis der festgestellten Änderung einen Szenenwechsels in der Bildsequenz 22 bzw. 20 erkennt oder eine weitere Verarbeitung der Sequenz 22 von codierten Bildern auf solche Bilder oder sogar solche Teile von Bildern beschränkt, bei denen die durch die Änderungserkennungsvorrichtung 12 erkannten Änderungen zwischen Bildern einen bestimmten Schwellwert überschreitet oder unterschreitet, wobei im Folgenden noch Beispiele dafür geliefert werden. Ferner kann die Änderungserkennungsvorrichtung 12 auch gleich dazu ausgebildet sein, um zu überprüfen, ob die erkannte Änderung ein vorbestimmtes Maß überschreitet, und ansprechend darauf, dass die Überprüfung ergibt, dass die erkannte Änderung das vorbestimmte Maß überschreitet, vermittels der Vorrichtung 18 eine vorbestimmte Aktion auszulösen, wie einen Benutzer über die Änderung zu benachrichtigen, die Änderung anzuzeigen, den Start einer Aufnahme zu veranlassen usw.

Die vorhergehende Beschreibung von Figur 1 zeigte somit, dass die Änderungserkennungsvorrichtung 12 in der Lage ist, Änderungen von Bildbereichen direkt aus dem Vergleich zweier komprimierter Bilder zu erkennen. Die Bilder müssen dazu nicht dekomprimiert werden. Eine rechenaufwendige Dekompression der Bilddaten ist damit nicht erforderlich. Erfordert die weitere Verarbeitung in der Vorrichtung 18 eine Dekompression, so muss diese Dekompression nur noch für Bildbereiche durchgeführt werden, die tatsächlich benötigt werden.

Bezug nehmend auf Figur 2 wird nunmehr ein spezielles Ausführungsbeispiel für eine Codierung der codierten Bilder beschrieben, wobei bei den nachfolgenden Ausführungsbeispielen exemplarisch davon ausgegangen wird, dass die Bilder mittels einer solchen Codierung bzw. Kompression codiert sind. Für die Codierung, die im Folgenden beschrieben wird, ist auch das JPEG2000-Kompressionsformat ein Beispiel.

Das Codierschema von Figur 2 ist Wavelet-basiert, d.h. ein Einzelbild 24 wird durch eine Wavelet-Transformation 26 in eine Wavelet-Transformierte 28 überführt. Dazu wird das Bild 24 in einer ersten Iteration bzw. Stufe mit einer der Wavelet-Transformation zugrunde liegenden Wavelet-Funktion gefaltet, die eine solche Übertragungsfunktion besitzt, dass mittels dieser Wavelet-Funktion bzw. mittels des hierdurch definierten Wavelet-Filters die Ortsfrequenzen des Einzelbildes jeweils in zwei Teile aufgetrennt werden können, wodurch sich Subbänder ergeben. Insbesondere findet die Anwendung des Wavelet-Filters in der x- und y-Richtung so statt, dass aus dem Einzelbild 24 ein in der x-Richtung hochpassgefiltertes und der y-Richtung tiefpassgefiltertes Subband bzw. Bild 32 (HL), ein in der x-Richtung tiefpassgefiltertes und der y-Richtung hochpassgefiltertes Subband bzw. Bild 34 (LH) und ein Bild bzw. Subband 36 erhalten wird, das in beiden Richtungen, d.h. x und y, hochpassgefiltert ist. Auch ein in beiden Richtungen tiefpassgefiltertes Bild 38 wird in jeder Stufe 30 erhalten. Alle Subbänder 32-38 sind um den Faktor 2 in der x- und y-Richtung unterabgetastet. Letzteres, in beiden Richtungen tiefpassgefiltertes Subband 38 dient als Ausgangsposition für die nächste Transformationsstufe 30, wie es mit dem Pfeil 40 angedeutet ist. Lediglich in der letzten Stufe bzw. Iteration bleibt das in beiden Richtungen tiefpassgefilterte Subband 39 erhalten. Aufgrund der pro Iteration stattfindenden Unterabtastung lassen sich die Transformationskoeffizienten so anordnen, wie es bei 28 in Figur 2 gezeigt ist. Die Subbänder der zweiten Stufe sind exemplarisch bei 42, 44 und 46 gezeigt. Nach der Wavelet-Transformation werden die Transformationskoeffizienten blockweise komprimiert 48, wobei eine Entropie-Codierung verwendet wird, die jeden Block von Wavelet-Transformationskoeffizienten der Wavelet-Transformierten 28 in Code-Blöcke 50 variabler Länge überführt. Die Kompression 48 geschieht beispielsweise so, dass die Blöcke, in denen die Waveletkoeffizienten in die Code-Blöcke 50 überführt werden, immer gleich groß sind, wenngleich sich die Größe der Subbänder bzw. die Ortsauflösung derselben von Stufe zu Stufe verringert, wie z.B. von der Stufe der Subbänder 32-36 zu der Stufe der Subbänder 42-46, wie es bereits im Vorhergehenden beschrieben worden ist. Um dies zu veranschaulichen, sind exemplarisch zwei Blöcke von Transformations-Koeffizienten 52 und 54 in die Subbänder 46 und 34 unterschiedlicher Transformationsstufe eingezeichnet, die gleiche Größe besitzen, wie z.B. 64x64 Wavelettransformationskoeffizienten groß. Aufgrund der Tatsache aber, dass die Ortsauflösung dieser Subbänder von Stufe zu Stufe geringer wird, bezieht sich der Block 54 von Wavelettransformationskoeffizienten auf einen kleineren Abschnitt 56 des Einzelbildes 24 als der Block 52 von Wavelettransformationskoeffizienten des Bandes 46 niedrigerer Stufe, der sich nämlich auf den in x- und y-Richtung doppelt so großen Abschnitt 58 bezieht. Auf diesen Aspekt wird bezüglich der Figur 3 noch eingegangen werden.

Für die Entropie-Codierung 48 kann beispielsweise eine arithmetische Codierung oder eine variable Länge-Codierung, wie z.B. eine Huffman-Codierung, verwendet werden. Die Transformations-Koeffizienten eines Blockes 52 bzw. 54 können beispielsweise in der Reihenfolge ihrer Wichtigkeit codiert werden. Beispielsweise werden die Transformationskoeffizienten Bitebenen-weise von der höchstwertigen Bitstufe zu der niedrigstwertigen Bitstufe codiert. Innerhalb jeder Bitebene werden beispielsweise drei Durchläufe verwendet, wobei zunächst in einem ersten Durchlauf die Bits derjeniger Transformationskoeffizienten der aktuellen Bitebene codiert werden, die bereits signifikant sind, danach in einem zweiten Durchgang die Bits von Transformations-Koeffizienten, die in ihrer Umgebung signifikante Transformationskoeffizienten besitzen, und in einem dritten Durchgang der Rest der jeweiligen Bitebene.

Die Beschreibung von Figur 2 bezog sich nur auf ein Einzelbild 24. Der Codierer 16 führt die Codierung nach Figur 2 für jedes Einzelbild 24 der Sequenz 20 einzeln durch, unabhängig von den jeweils anderen Bildern der Sequenz 20.

Wie gesagt, entspricht auch eine Video-Kompression mit dem JPEG2000-Standard angewendet auf unabhängige Einzelbilder dem Vorgehen nach Figur 2. Die Video-Kompression mit dem JPEG2000-Standard ist ein Beispiel für das Vorgehen nach Figur 2. Wie bei Figur 2 werden dort als wesentliche Komponenten der Kompression eines Bildes die Bilddaten zunächst mit einer Wavelet-Transformation umgewandelt, wobei der niederfrequente Anteil LL in mehreren Stufen immer weiter zerlegt wird. Einzelne Bildblöcke dieser transformierten Darstellung 28 werden dann einzeln komprimiert. Jeder Code-Block beschreibt einen Bildbereich von z.B. 64x64-Bildpunkten der Darstellung 28. Die entstehenden Code-Blöcke haben dann eine variable Länge.

Bei dem Vorgehen von Figur 2 ist die Menge der Daten eines Code-Blocks 50 direkt abhängig von der Entropie und damit von der Komplexität eines Bilbereichs. Diese Länge eines Code-Blocks kann ohne die Dekompression der eigentlichen Bilddaten aus der komprimierten Darstellung extrahiert werden. Jeder Code-Block 50 entspricht also einem Ausschnitt 52, 54 in der Wavelet-transformierten Darstellung 28. Die Umkehrung der Wavelet-Transformation 26 muss nicht erst durchgeführt werden, um festzustellen, welcher Code-Block 52, 54 welchem Ausschnitt 56, 58 aus dem Einzelbild 24 entspricht. Dafür ist kein großer Rechenaufwand nötig. Wenn nun die n-Bits eines Code-Blocks 50 auf die zugehörige Fläche A desjenigen Ausschnitts 56 bzw. 58 aufgeteilt werden, auf die sich der durch den Code-Block 50 komprimierte dargestellte Block 52 bzw. 54 von Wavelet-Transformationskoeffizienten bezieht, kann jedem Bildpunkt dieses Ausschnitts 56 bzw. 58 aus diesem Code-Block 50 n/A Bits zugerechnet werden. Natürlich überschneiden sich die den Code-Blöcken 52 bzw. 54 zugeordneten Ausschnitte 56 bzw. 58, so wie es ja auch in Figur 2 gezeigt ist, so dass die Beiträge aus allen Code-Blöcken 50 für einen bestimmten Bildpunkt direkt aufaddiert werden können, wobei dies natürlich für alle Bildpunkte möglich ist oder für eine geringere Auflösung.

Dies ist in Figur 3 noch einmal exemplarisch dargestellt. Figur 3 zeigt die Funktionsweise der Änderungserkennungsvorrichtung 12 von Figur 1. Zwei codierte Bilder 62 und 64 - hier exemplarisch zwei aufeinander folgende Bilder n und n-1, zwischen denen eine bildliche Änderung festzustellen ist - werden durch die Vorrichtung 12 jeweils einer Blocklängenextraktion 66 unterzogen. Das heißt, die Länge der Code-Blöcke 50 des jeweiligen codierten Bildes 62 bzw. 64 wird bestimmt. Die Bestimmung der Länge kann in allen möglichen Einheiten erfolgen, wie z.B. in Bits oder syntaktischen Elementen. Die Extraktion der Blocklängen 66 kann sich auch auf lediglich einen Teil der Code-Blöcke 50 der codierten Bilder 62 und 64 beschränken, wie z.B. auf diejenigen, die sich auf einen mittleren Bildausschnitt der codierten Bilder 62 und 64 beziehen.

Die mit der Extraktion 66 ermittelten Blocklängen der Code-Blöcke 50 stehen, wie es bereits im Vorhergehenden beschrieben worden ist, stellvertretend für die Komplexität des jeweiligen Bildausschnittes 56 bzw. 58 des jeweiligen Bildes 62 bzw. 64, auf den sich der jeweilige Code-Block 50 bezieht. Durch eine Summierung 68 pro codiertem Bild 62 bzw. 64 wird nun die Komplexität des jeweiligen codierten Bildes 62 bzw. 64 ortsaufgelöst berechnet bzw. geschätzt, indem an jedem der Bilder 62 bzw. 64 einzeln folgendes durchgeführt wird. Für jeden Code-Block 50, dessen Länge durch die Extraktion 66 bestimmt worden ist, wird, wie im Vorhergehenden beschrieben, berücksichtigt, auf welchen Abschnitt in der nicht-transformierten Darstellung sich der Code-Block bezieht. In einer geeigneten Ortsauflösung, die das jeweilige Bild 62 bzw. 64 in der nicht-transformierten Darstellung in Bildeinheitsbereiche unterteilt, werden dann die Längen der Code-Blöcke 50, die sich auf den gleichen Bildeinheitsbereich beziehen, weil ihr zugeordneter Abschnitt 56 bzw. 58 zumindest teilweise mit diesem Bildeinheitsbereich überlappt, aufsummiert, wobei die einzelnen Summanden bzw. Längen mit einem Faktor gewichtet werden, der einem Verhältnis zwischen dem sich überlappenden Anteil des Bildabschnitts 56 bzw. 58, auf den sich der jeweilige Code-Block 50 bezieht, und der Gesamtfläche dieses Bildabschnitts 56 bzw. 58 entspricht. Geht man beispielsweise wie in Figur 2 in dem Fall der Abschnitte 56 und 58 exemplarisch angedeuteten Fall davon aus, dass die Bildabschnitte, auf die sich die Code-Blöcke 50 beziehen, immer entweder vollständig überlappen oder gar nicht, dann kann bei der Aufsummierung für einen bestimmten Bildeinheitsbereich zur Gewichtung ein Faktor verwendet werden, der dem Inversen der Fläche des Bildabschnitts entspricht, auf den sich der jeweilige Code-Block bezieht. Dies bedeutete, wie in Figur 3 angedeutet, dass für einen Bildeinheitsbereich Summanden aufaddiert werden würden, die gleich der Länge des jeweiligen Code-Blocks 50, der sich auf diesen Bildeinheitsbereich bezieht, in beispielsweise Bits geteilt durch die Fläche (A) des Bildabschnitts, auf den sich der jeweilige Code-Block 50 bezieht, in beispielsweise Pixeln, wären. Die Bildeinheitsbereiche, für die die Summierungen 68 durchgeführt werden, können für die codierten Bilder 62 und 64 verschieden angeordnet sein. Ferner können die Bildeinheitsbereiche Bildpunkten entsprechen oder sie können größere Einheiten sein, wie z.B. Bildeinheitsbereiche der Größe der Bildabschnitte, auf die sich die Transformationskoeffizienten-Blöcke 54 der ersten Wavelet-Transformationsstufe beziehen, d.h. der Wavelet-Transformationsstufe mit der größten Ortsauflösung, da diese Blöcke 54 die kleinsten zugeordneten Bildausschnitte 56 besitzen.

Das Ergebnis der Aufsummierung 68 entspricht einer ortsaufgelösten Komplexität der eingehenden zu vergleichenden Bilder 62 bzw. 64. Zur Feststellung einer Änderung in den Bildern 62 und 64 führt die Änderungserkennungsvorrichtung 12 einen Vergleich 70 zwischen den ortsaufgelösten Komplexitätsverteilungen durch, wobei dieser Vergleich, wie in Figur 3 gezeigt, beispielsweise in einer ortsaufgelösten Differenz der beiden Komplexitätsverteilungen bestehen kann. Das Ergebnis ist wiederum eine ortsaufgelöste Änderungsmaske 72, die an denjenigen Stellen, an denen keine Änderungen aufgetreten sind, sehr klein ist bzw. 0 beträgt und an den Stellen der Bilder, an denen Änderungen aufgetreten sind, sehr wahrscheinlich größere Werte besitzt, da sich mit Bildänderungen zwischen den Bildern 62 und 64 auch die Komplexität an diesen Stellen ändert.

In anderen Worten ausgedrückt, kann die ermittelte Komplexität eines Bildeinheitsbereichs aus der Aufsummierung 68 gut als Maß verwendet werden, um eine Änderung zu erkennen. Ein Vergleich 70 der Komplexität pro Bildregion gibt Aufschluss darüber, welche Bildbereiche sich geändert haben und welche nicht. Es genügt also für jeden Bereich im Bild einen Vergleich der Menge der zugehörigen codierten Daten durchzuführen. Ist diese Menge unterschiedlich, dann unterscheiden sich die Bilder an dieser Bildposition.

Es wird darauf hingewiesen, dass die Codierung der zu vergleichenden Bilder 62 und 64 manchmal auf unterschiedliche Datenraten hin eingestellt ist. Das heißt, die zu vergleichenden Bilder 62 und 64 sind codierseitig nach dem gleichen Vorgehen, wie z.B. nach dem Vorgehen von Figur 2, codiert worden, wobei allerdings zur Einhaltung einer unterschiedlichen Codierrate die Längen der Code-Blöcke 50 unterschiedlich eingestellt ist. Wenn, wie im Vorhergehenden erwähnt, die Codierung so funktioniert, dass die Code-Blöcke so skaliert codiert sind, dass die für die Qualität wichtigeren Informationen in dem Code-Block 50 weiter vorne angeordnet sind, dann unterscheiden sich in diesem Fall die Code-Blöcke von gleichen Bildern, die lediglich mit unterschiedlicher Datenrate codiert worden sind, lediglich dadurch, dass Enden der Code-Blöcke 50 bei dem einen codierten Bild mit der geringeren Datenrate fehlen. Im Falle unterschiedlicher Datenraten können codierte Bilder 62 bzw. 64 deshalb weiterhin vergleichen werden, wenn bei dem Vergleich 70 beispielsweise eine Normierung auf die Datenrate durchgeführt wird.

Nachdem nun im Vorhergehenden ein Ausführungsbeispiel für die Änderungserkennungsvorrichtung 12 näher beschrieben worden ist, werden im Folgenden Anwendungsmöglichkeiten für eine Änderungserkennung gemäß der vorliegenden Erfindung geliefert, wobei die Anwendungen Nutzen daraus ziehen, dass eine Extraktion der Komplexität eines Bildbereichs direkt aus einem komprimierten Datenstrom möglich ist, so dass über den Vergleich zweier Bilder eine Änderung des Bildinhalts erkannt werden kann. Die nachfolgend beschriebenen Ausführungsbeispiele sind auch mit den anderen, weiter oben angedeuteten Alternativen zu Fig. 2 und 3 für die Änderungserkennung kombinierbar.

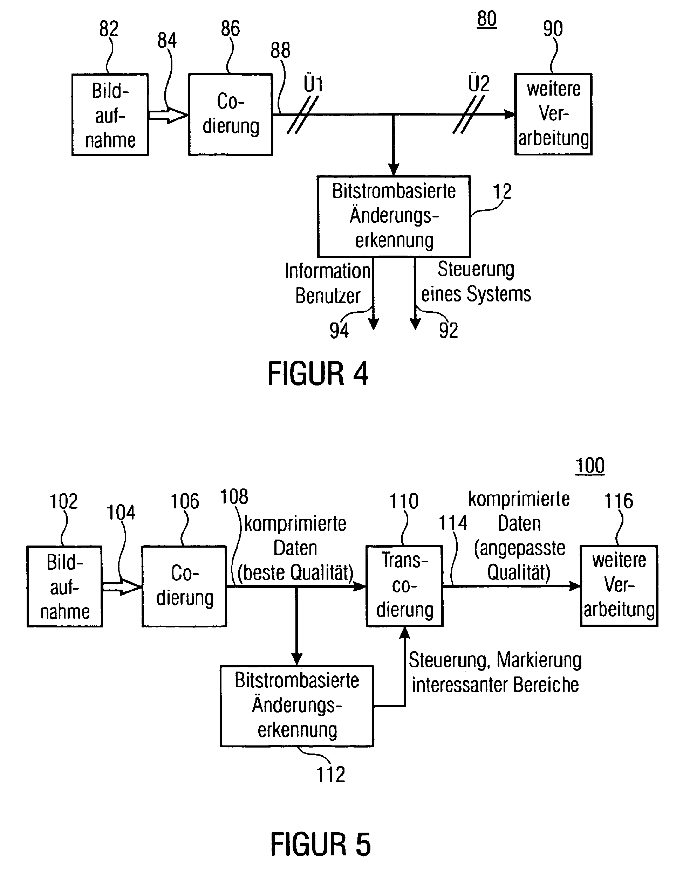

Figur 4 zeigt ein Beispiel für eine Videoüberwachungsvorrichtung 80. Eine Bildaufnahmevorrichtung 82, wie z.B. eine Kamera, gibt eine Bildsequenz bzw. ein Video 84 an einen Codierer 86 aus, der wiederum eine Sequenz 88 von individuell codierten Bildern ausgibt. Die Elemente 82-88 entsprechen beispielsweise den Komponenten 14, 20, 16 und 22 aus Figur 1. An den Codierer 86 schließt sich eine Vorrichtung 90 für eine weitere Verarbeitung an, sowie eine Änderungserkennungsvorrichtung 12 gemäß der vorliegenden Erfindung. Verarbeitungsvorrichtung 90 und Änderungserkennungsvorrichtung 12 verarbeiten die Sequenz codierter Bilder 88. Die Änderungserkennungsvorrichtung 12 von Figur 4 besitzt exemplarisch zwei Ausgänge, einen ersten Ausgang 92 zur Steuerung eines Systems, wie z.B. eines Aktors zur Nachführung der Bildaufnahmevorrichtung 82 zu einem Objekt, das von derselben aufgenommen wird, sowie einen zweiten Ausgang 94 zum Informieren eines Benutzers über Bildänderungen, wie z.B. eines Wachpersonals.

In einer Videoüberwachungsvorrichtung 80, wie sie in Figur 4 gezeigt ist, könnte eine Änderungserkennung, wie sie im Vorhergehenden beschrieben worden ist, für die Videobasierte Überwachung eingesetzte werden, indem der Bildstrom 84 direkt nach der Aufnahme komprimiert wird. In Figur 4 ist mit Ü1 die Übertragung von dem Codierer 86 zu der Änderungserkennungsvorrichtung 12 angedeutet. Aufgrund der relativ unaufwendigen Erkennung ohne Dekompression ist es möglich, dass die Elemente 82, 86 und 12 in einer Kamera bzw. einem Kameragehäuse untergebracht sind, so dass aus dem komprimierten Datenstrom 88 direkt in einer solchen Kamera eine Erkennung von Änderungen durchgeführt werden könnte. Die Verarbeitungsvorrichtung 90 und die Übertragung des komprimierten Datenstromes 88 an dieselbe, die mit Ü2 in Figur 4 angedeutet ist, sind somit natürlich ebenfalls optional. Andererseits ist es möglich, dass die Änderungserkennungsvorrichtung 12 jenseits des Kammergehäuses untergebracht ist, wie z.B. in einem Anzeige- oder Aufzeichnungsgerät.

Zusätzlich zu den Funktionen, die im Vorhergehenden Bezug nehmend auf Figur 3 erörtert worden sind, führt die Änderungserkennungsvorrichtung 12 von Figur 4 beispielsweise noch eine Bewertung der Änderungen an den einzelnen Bildbereichen durch, indem die Stellen ermittelt werden, an denen die Änderungsmaske 72 eine vorbestimmte Schwelle beschreitet. Je nachdem, ob die Änderungsmaske 72 den vorbestimmten Schwellwert überschreitet, oder an wie vielen Stellen, löst die Änderungserkennungsvorrichtung 12 beispielsweise über den Ausgang 92 und 94 verschiedene Aktionen aus, wie z.B. die Information eines Benutzers über die Änderung, die Steuerung eines Systems oder aber eine Speicherung der Daten.

Es sei darauf hingewiesen, dass mithin ein Vorteil an der unaufwendigen Änderungserkennung in der Vorrichtung 12 darin besteht, dass die Erkennung auch für hohe Auflösungen und für hohe Bildwiederholraten anwendbar ist, da der benötigte Rechenaufwand eben gering ist.

Wie im Vorhergehenden gezeigt kann die Änderungserkennung sowohl für örtliche als auch für zeitliche Übertragung (Speicherung) genutzt werden. Bei Speicherung der komprimierten Daten 88 kann zusätzlich eine schnelle Analyse und Suche von Änderungen stattfinden. Ein Anwender könnte also beispielsweise in Überwachungsvideos im Nachhinein "Änderungen links oben im Bild" suchen. Die Änderungserkennungsvorrichtung 12 wäre dann jenseits der Kamera beispielsweise bei einem Anzeige- oder Aufzeichnungsgerät angeordnet und würde die zuvor beschriebene Blocklängen-Extraktion 66, Summierung 68 und Vergleich 70 auf die gewünschte Bildregion, hier also links oben, beschränken. Der geringe Rechenaufwand ermöglicht dann eine besonders schnelle Suche in komprimiert gespeicherten Bilddaten.

Die zuletzt beschriebene Beschränkungsmöglichkeit nutzt eine Eigenschaft der Codierung nach Figur 2 aus, wonach es möglich ist, bestimmte Teile der nicht-transformierten Darstellung eines Einzelbildes 24 gezielt zu decodieren, da ja feststeht, welche Code-Blöcke 50 sich auf welchen Bildausschnitt beziehen. Anders ausgedrückt kann auch ohne Decodierung aufgrund der Codeblocklängen die Komplexität nicht nur ortsabhängig sondern auch gezielt für bestimmte Bildregionen bestimmt werden. Im Anschluss daran kann abhängig von dem Änderungserkennungsergebnis aufgrund der erhaltenen Ortsauflösung der Wavelet-Transformation die Rücktransformation örtlich auf einen gewünschten Bildteil beschränkt werden. Die Änderungserkennung kann also beispielsweise direkt auch nur nach Codeblöcken "links oben" suchen und dann eine Decodierung veranlassen. Auch hier ist zunächst keine Decodierung nötig. Im Rahmen einer Videoanalyse kann diese als Skalierbarkeit bezeichnete Eigenschaft effizient genutzt werden, wenn von der Änderungserkennung der Vorrichtung 12 Gebrauch gemacht wird. In der Videoüberwachungsvorrichtung von Figur 4 könnte beispielsweise die Änderungserkennungsvorrichtung 12 veranlassen, dass nur Bereiche vollständig decodiert werden, die auch "interessant" sind, bzw. an welchen Bereichen die Änderungsmaske 72 einen vorbestimmten Schwellwert überschreitet. Beispielsweise veranlasst die Änderungserkennungsvorrichtung im Rahmen der Inhalts-basierten Videoverarbeitung, dass nur diejenigen Bildbereiche für eine anschließende Objektsuche und/oder Objektverfolgung decodiert werden, die Änderungen aufweisen bzw. an denen die Änderungsmaske 72 einen vorbestimmten Schwellwert überschreitet. Bildbereiche, die keine bzw. nicht signifikante Änderungen aufweisen und deshalb nicht verarbeitet werden müssen, müssen nicht decodiert werden, was wiederum den Aufwand zur Objektsuche und/oder - verfolgung deutlich verringert.

Auch für eine Analyse von Bewegungen in Videosequenzen 84 kann eine Änderungserkennung 12 mögliche Kandidaten für eine genauere Suche liefern. Dies kann bei übertragenen oder gespeicherten Sequenzen verwendet werden. Unveränderte Bereiche im Bild müssen dann nicht decodiert werden.

Eine ähnliche Vorgehensweise kann auch zur Szenenwechselerkennung verwendet werden. In Figur 1 kann beispielsweise die Vorrichtung 18 eine Vorrichtung sein, die anhand der Änderungsmaske, die von der Änderungserkennungsvorrichtung 12 ausgegeben wird, einen Szenenwechsel daran erkennt, dass die Änderung, die durch die Änderungsmaske 72 repräsentiert wird, ein vorbestimmtes Maß überschreitet. Alternativ kann die Vorrichtung 18 einen Cluster-Algorithmus verwenden, um einen Szenenwechsel zu erkennen. Wichtig ist, dass die Szenenwechselerkennung für einen komprimierten Datenstrom erfolgen könnte, da es eben ausreicht, dass bei einem Wechsel einer Szene die Komplexität aller Regionen des Bildes eine deutliche Änderung erfahren wird, was, wie im Vorhergehenden beschrieben, ohne Dekompression festgestellt werden kann.

In Figur 4 kann die Vorrichtung 90 beispielsweise eine Vorrichtung sein, die eine Nachbereitung einer aufgenommenen Bildsequenz 88 durchführt, und zwar eine Rausch-Reduktion durch Mittelwertbildung über Bildbereiche, die sich nicht ändern. In diesem Fall kann beispielsweise die Änderungserkennungsvorrichtung 12 die Verarbeitungsvorrichtung 90 steuern, indem sie der Verarbeitungsvorrichtung 90 die Bildbereiche mitteilt, an denen keine signifikante Änderungen aufgetreten sind. Die Verarbeitungsvorrichtung 90 kann somit erheblich Rechenaufwand einsparen, da unbewegte Bereiche erkannt und bewegte, unnötige Bildbereiche nicht dekomprimiert werden müssen.

Figur 5 zeigt ein nächstes Anwendungsbeispiel, nämlich eine Vorrichtung zur Transcodierung von Bildmaterial. Die Vorrichtung von Figur 5, die allgemein mit 100 angezeigt ist, umfasst eine Bildaufnahmevorrichtung 102, die eine Sequenz von Bildern 104 an einen Codierer 106 ausgibt, der wiederum einen komprimierten Datenstrom 108 ausgibt, und zwar an einen Transcodierer 110 und an eine Änderungserkennungsvorrichtung 112 gemäß der vorliegenden Erfindung. Der Transcodierer 110 wird über die Änderungserkennungsvorrichtung 112 gesteuert und gibt einen komprimierten Datenstrom aus, der, wie es im Folgenden noch beschrieben wird, in seiner Qualität gegenüber dem eingehenden geeignet angepasst ist und in Figur 5 mit dem Bezugszeichen 114 angezeigt ist, wobei dieser Datenstrom 114 beispielsweise in einem Block 116 weiterverarbeitet wird.

In dem Szenario von Figur 5 wird der komprimierte Datenstrom 108 beispielsweise zunächst in einer hohen Qualität erzeugt. Beispielsweise wird er mit einer hohen Datenrate oder sogar verlustlos erzeugt. Der Codierer 106 kann hierbei - und das gilt für alle anderen Ausführungsbeispiele, die im Vorhergehenden beschrieben worden sind, ebenfalls - in Form einer integrierten Schaltung, wie z.B. einen Standard-IC, realisiert sein. Der komprimierte Datenstrom 108 wird dann durch die Änderungserkennungsvorrichtung 112 analysiert, um sich ändernde Bildbereiche in der Videosequenz bzw. Bildsequenz 104 festzustellen. Der Transcodierer 110 ist ausgebildet, um Bildbereiche, die von der Änderungserkennungsvorrichtung 112 vorgegeben werden, in ihrer Qualität anzupassen bzw. zu reduzieren, wodurch Datenrate eingespart wird. Dabei ist der Transcodierer 110 ausgebildet, die Anpassung der Codierung dadurch in ihrer Qualität anzupassen bzw. zu reduzieren, dass der Transcodierer 110 diejenigen Code-Blöcke, die sich auf die vorgegebenen Bildbereiche beziehen, abschneidet, wodurch die Qualität dieser Bildbereiche angepasst wird. Andere Möglichkeiten für eine Qualitätsreduzierung bestünden natürlich ebenfalls. Das Abschneiden von Enden der Code-Blöcke ist aber besonders einfach und ist insbesondere dann möglich, wenn, wie im Vorhergehenden beschrieben, die Code-Blöcke so codiert sind, dass die für die Qualität wichtigeren Informationen in den Code-Blöcken weiter vorne angeordnet sind. Wo der Transcodierer 110 Code-Blöcke abschneidet, kann nach einem festen Längenverhältnis bestimmt sein, oder von dem Maß an erkannter Änderung in diesem Bildbereich abhängen, wie es im Nachfolgenden noch beschrieben wird.

Bei einer Überwachungsanwendung könnte beispielsweise die Änderungserkennungsvorrichtung 112 dem Transcodierer 110 diejenigen Bereiche zur Qualitätsreduzierung vorgeben, an denen Änderungen zwischen aufeinander folgenden Bildern nicht aufgetreten sind. Die Bildqualität derjenigen Bildbereiche, an denen Änderungen auftreten, und an denen potenziell interessante Bewegungen stattfinden können, können somit mit einer höheren Qualität dargestellt werden, wohingegen in dem komprimierten Datenstrom 114 mit angepasster Qualität die "uninteressanten" Bereiche relativ codiereffizient codiert sind, und somit die Gesamtdatenrate sinkt. Die Änderungserkennungsvorrichtung 112 gibt somit eine Art ROI (region of interest) vor.

Die Vorrichtung von Figur 5 kann allerdings auch dazu dienen, die Qualität eines Videos für den Benutzer möglichst aufrecht zu erhalten und trotzdem die Datenrate zu verringern. Wie im Vorhergehenden erwähnt, sind die Bilder einzeln unabhängig voneinander codiert. Eine unterschiedliche Wahrnehmung von Störungen in bewegten Bildbereichen wird bei der Codierung also nicht berücksichtigt. Für die Übertragung hochqualitativer Sequenzen 114 kann die Qualität in sich ändernden Bildbereichen allerdings reduziert werden, da das Auge vornehmlich die sich nicht ändernden Bildbereiche genau analysiert und die Bereiche mit Bewegungen lediglich relativ grob beobachtet. In diesem Anwendungsfall kann die Änderungserkennungsvorrichtung 112 dem Transcodierer 110 beispielsweise zur Qualitätsreduzierung diejenigen Bildbereiche vorgeben, in denen Bewegungen auftreten bzw. Änderungen ein vorbestimmtes Maß überschreiten, so dass der Transcodierer 110 diese Bereiche in ihrer Qualität reduziert, wodurch wiederum bei gleichem oder ähnlichem Qualitätseindruck Datenrate eingespart werden kann.

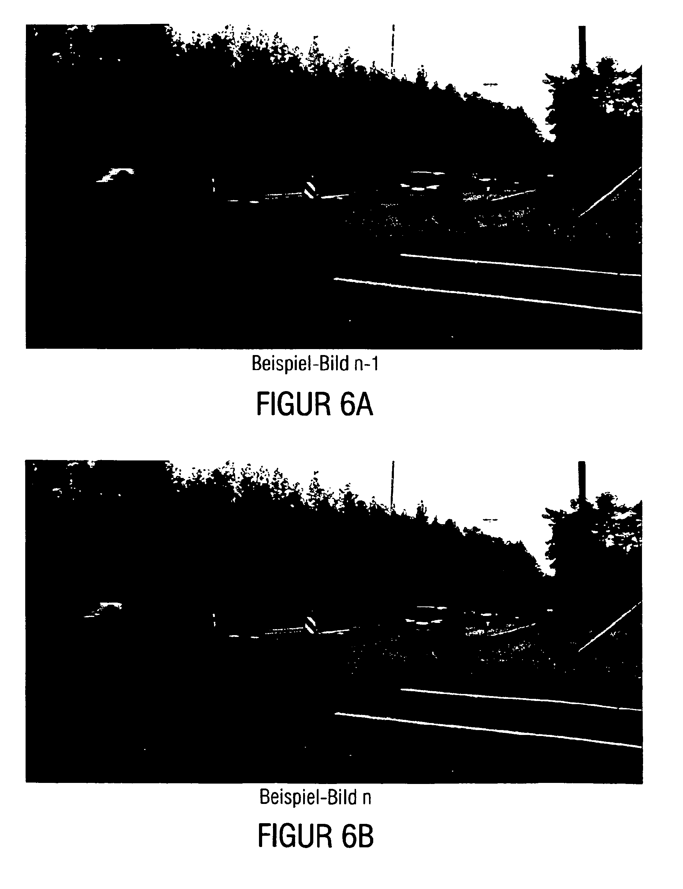

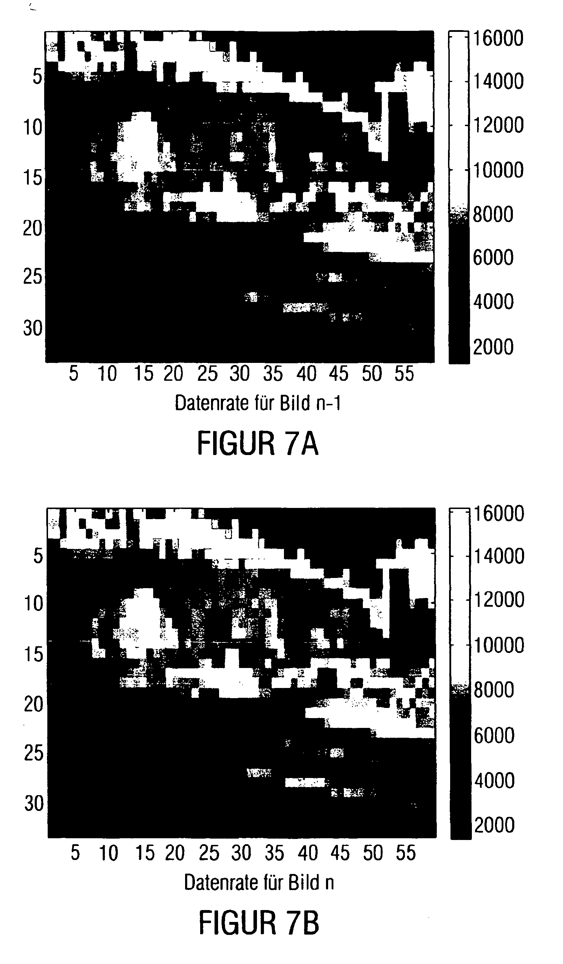

Zum Abschluss werden noch Bezug nehmend auf die Figuren 6 bis 9 exemplarische zu vergleichende Bilder und deren Ergebnis der Summierung 68 bis hin zu der Änderungsmaske 72 bezüglich dieser Bilder gezeigt. Die Figuren 6A und 6B zeigen zwei aufeinander folgende Bilder aus einer Bildsequenz. Bei genauer Betrachtung ist zu erkennen, dass die beiden Autos im Vordergrund durch das Bild fahren und sich von einem zum nächsten Bild etwas bewegen. Die Originalsequenz hat 1.920 x 1.080 Bildpunkte und ist hier verkleinert dargestellt. Die Figuren 7A und 7B stellen das Ergebnis der Summierung 68 aus Figur 3 dar. Die Unterschiede zwischen den Datenratenverteilungen der beiden Bilder sind gering und in der Dar-stellung der Figuren 7A und 7B kaum sichtbar. In der Differenz der Datenraten- bzw. Komplexitätsverteilungen - also einem Ergebnis einer Differenz 70 aus Fig. 3 - , die in Figur 8 gezeigt ist, sind hingegen die sich bewegenden und geänderten Regionen deutlich sichtbar, wie es im Vorhergehenden beschrieben worden ist.

Es wird darauf hingewiesen, dass in Abweichung von den vorhergehenden Ausführungsbeispielen die vorliegende Erfindung nicht auf die Feststellung von Änderungen zwischen aufeinander folgenden Bildern einer Bildsequenz eingeschränkt ist. Die Bilder könnten auch Einzelaufnahmen einer Standbildkamera sein. Auch die Bilder von verschiedenen Kameras könnten miteinander verglichen werden, wie z.B. die Bilder zweier Kameras, die ein und dieselbe Szene aus verschiedenen Blickwinkeln aufnehmen. Schließlich sei noch einmal darauf hingewiesen, dass die vorliegende Erfindung nicht auf das Codierschema nach Figur 2 eingeschränkt ist. Ferner ist die Feststellung, ob eine Änderung in einer Bildsequenz ein bestimmtes Maß überschreitet, nicht, wie im vorhergehenden Dargestellt, auf die Betrachtung von Paaren von jeweils unmittelbar aufeinander folgenden Bildern begrenzt. Ein laufendes Mittel könnte über die Änderungen von einem Bild zum nächsten bildbereichsweise gebildet und daraufhin überprüft werden, ob es einen vorbestimmten Wert überschreitet. Ferner wäre es möglich, ein Bild nicht nur mit seinem unmittelbar nachfolgenden zu vergleichen sondern mit einer Mehrzahl der nachfolgenden Bilder, wobei das Änderungsmaß nur für diejenigen Bildregionen als überschritten gilt, an denen die Änderung der Komplexität durchgehend oder überwiegend einen vorbestimmten Schwellwert überschreitet.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

## Patentansprüche

1. Vorrichtung zur Erkennung einer Änderung zwischen einzelnen Bildern oder zwischen Bildern in einer Sequenz von Bildern (20), die jeweils individuell zu Codeblöcken (50) variabler Länge entropiecodiert sind, die unterschiedlichen Abschnitten (56, 58) der jeweiligen Bilder zugeordnet sind, wobei die Vorrichtung ausgebildet ist, zur Erkennung der Änderung ein Maß für die Änderung zu verwenden, das von einer Länge der Codeblöcke (50) der Bilder abhängt,
wobei die Bilder mittels einer Wavelettransformation (26) in Subbänder (32, 34, 36, 39, 42, 44, 46) unterschiedlicher Transformationsstufen zerlegt codiert sind und die Codeblöcke (50) entropiecodierte Versionen von Transformationskoeffizientenblöcken (52, 54) der Subbänder darstellen, wobei die Vorrichtung folgende Merkmale aufweist:
eine Einrichtung (68) zum - für jeweils ein erstes und ein zweites der Bilder, - für Bildeinheitsbereiche, in die das jeweilige Bild gemäß einer jeweiligen Ortsauflösung unterteilt ist - Aufsummieren der Längen derjeniger Codeblöcke (50), die sich gemäß der Wavelettransformation (26) auf einen Bildabschnitt (56, 58) beziehen, der mit dem jeweiligen Bildeinheitsbereich überlappt, auf eine von einem Verhältnis des jeweiligen Bildeinheitsbereichs zu dem jeweiligen Bildabschnitt abhängig gewichteten Weise, um für die Bildeinheitsbereiche des jeweiligen Bilds jeweils einen aufsummierten Wert als ein Maß für eine lokale Entropie zu erhalten; und
eine Einrichtung (70) zum Berechnen des Maßes für die Änderung abhängig von den aufsummierten Werten.

2. Vorrichtung gemäß Anspruch 1, bei der die Einrichtung (70) zum Berechnen ausgebildet ist, um ortsaufgelöst die Änderung durch ortsabhängige Bestimmung einer Abweichung zwischen den aufsummierten Werten zwischen den Bildern zu bestimmen.

3. Vorrichtung gemäß Anspruch 1 oder 2, bei der die Bilder mit unterschiedlichen Datenraten kodiert sind, und die Einrichtung (70) zum Berechnen ausgebildet ist, den Datenratenunterschied bei der Berechnung zu berücksichtigen.

4. Vorrichtung gemäß einem der vorhergehenden Ansprüche, wobei die Vorrichtung ausgebildet ist, um die Änderung ortsaufgelöst durch ortsabhängigen Vergleich (70) der Längen der Codeblöcke (50) der Bilder zu bestimmen.

5. Vorrichtung gemäß Anspruch 4, bei der die Vorrichtung ausgebildet ist, um an Orten, an denen die Änderung ein vorbestimmtes Maß überschreitet, diejenigen Code-blöcke (50), die Abschnitten (56, 58) zugeordnet sind, die zumindest einen dieser Orte umfassen, zu decodieren, und einen Vergleich zwischen aus den decodierten Codeblöcken (50) rekonstruierten Abschnitten der Bilder durchzuführen, um Änderungen zwischen den einzelnen Bildern oder zwischen den Bildern in der Sequenz von Bildern in einer feiner Ortsauflösung zu erhalten.

6. Vorrichtung gemäß einem der Ansprüche 1 bis 5, wobei die Bilder Teil eines Videos sind und die Vorrichtung Teil einer Videoüberwachungsvorrichtung (80) ist, wobei die Vorrichtung konfiguriert ist, um zu veranlassen, dass an Orten, an denen die Änderung eine vorbestimmte Schwelle überschreitet, diejenigen Codeblöcke, die Abschnitten zugeordnet sind, die zumindest einen dieser Orte umfassen, decodiert werden und eine Objektsuche oder Objektverfolgung in aus den decodierten Codeblöcken rekonstruierten Abschnitten durchgeführt wird.

7. Vorrichtung gemäß einem der Ansprüche 1 bis 5, wobei die Bilder Teil einer Bildsequenz sind und die Vorrichtung Teil einer Rauschreduktionsvorrichtung ist, wobei die Vorrichtung konfiguriert ist, um zu veranlassen, dass an Orten, an denen die Änderung eine vorbestimmte Schwelle unterschreitet, diejenigen Codeblöcke, die Abschnitten zugeordnet sind, die zumindest einen dieser Orte umfassen, decodiert werden und eine zeitliche Mittelung über aus den decodierten Codeblöcken rekonstruierten Abschnitten durchgeführt wird.

8. Vorrichtung gemäß einem der Ansprüche 1 bis 5, wobei die Bilder Teil einer Bildsequenz sind und die Vorrichtung Teil einer Transcodiervorrichtung (100) zum Transcodieren der Bildsequenz von einer Eingangsqualität zu einer reduzierten Ausgangsqualität ist, wobei die Vorrichtung konfiguriert ist, um zu veranlassen, dass an Orten, an denen die Änderung eine vorbestimmte Schwelle unterschreitet, diejenigen Codeblöcke, die Abschnitten zugeordnet sind, die zumindest einen dieser Orte umfassen, einer Qualitätsreduktion unterzogen werden.

9. Vorrichtung gemäß einem der Ansprüche 1 bis 5, wobei die Bilder Teil einer Bildsequenz sind und die Vorrichtung Teil einer Transcodiervorrichtung (100) zum Transcodieren der Bildsequenz von einer Eingangsqualität zu einer reduzierten Ausgangsqualität ist, wobei die Vorrichtung konfiguriert ist, um zu veranlassen, dass an Orten, an denen die Abweichung eine vorbestimmte Schwelle überschreitet, diejenigen Codeblöcke, die sich gemäß der Wavelettransformation auf einen dieser Orte beziehen, einer Qualitätsreduktion durch beispielsweise Abschneiden von Enden der jeweiligen Codeblöcke unterzogen werden.

10. Vorrichtung gemäß einem der vorhergehenden Ansprüche, wobei die Bilder Teil einer Bildsequenz sind und die Vorrichtung ausgebildet ist, einen Szenenwechsel in der Bildsequenz auf Basis der Änderung zu erkennen.

11. Vorrichtung gemäß einem der vorhergehenden Ansprüche, wobei die Vorrichtung ausgebildet ist, um zu überprüfen, ob die erkannte Änderung ein vorbestimmtes Maß überschreitet, und ansprechend darauf, dass die Überprüfung ergibt, dass die erkannte Änderung das vorbestimmte Maß überschreitet, eine Benachrichtigung eines Benutzers über die Änderung, eine Anzeige der Änderung, einen Start einer Aufnahme oder eine Datenspeicherung auszulösen.

12. Verfahren zur Erkennung einer Änderung zwischen einzelnen Bildern oder zwischen Bildern in einer Sequenz von Bildern, die jeweils individuell zu Codeblöcken variabler Länge entropiecodiert sind, die unterschiedlichen Abschnitten des jeweiligen Bildes zugeordnet sind, wobei bei dem Verfahren zur Erkennung der Änderung ein Maß für die Änderung verwendet wird, das von einer Länge der Codeblöcke der Bilder abhängt,
wobei die Bilder mittels einer Wavelettransformation (26) in Subbänder (32, 34, 36, 39, 42, 44, 46) unterschiedlicher Transformationsstufen zerlegt codiert sind und die Codeblöcke (50) entropiecodierte Versionen von Transformationskoeffizientenblöcken (52, 54) der Subbänder darstellen, wobei das Verfahren folgende Schritte aufweist:
für jeweils ein erstes und ein zweites der Bilder, für Bildeinheitsbereiche, in die das jeweilige Bild gemäß einer jeweiligen Ortsauflösung unterteilt ist, Aufsummieren der Längen derjeniger Codeblöcke (50), die sich gemäß der Wavelettransformation (26) auf einen Bildabschnitt (56, 58) beziehen, der mit dem jeweiligen Bildeinheitsbereich überlappt, auf eine von einem Verhältnis des jeweiligen Bildeinheitsbereichs zu dem jeweiligen Bildabschnitt abhängig gewichteten Weise, um für die Bildeinheitsbereiche des jeweiligen Bilds jeweils einen aufsummierten Wert als ein Maß für eine lokale Entropie zu erhalten; und
Berechnen des Maßes für die Änderung abhängig von den aufsummierten Werten.

13. Computerprogramm mit einem Programmcode zur Durchführung eines Verfahrens gemäß Anspruch 12, wenn dasselbe von einem Prozessor ausgeführt wird.

## Claims

1. Apparatus for detecting a change between individual images or between images in a sequence of images (20), each individually entropy-encoded to code blocks (50) of variable lengths, which are allocated to different sections (56, 58) of the respective images, wherein the apparatus is implemented to use, for detecting the change, a measure for the change that depends on a length of the code blocks (50) of the images,
wherein the images are encoded in a manner divided into sub bands (32, 34, 36, 39, 42, 44, 46) of different transformation stages by means of a wavelet transformation (26), and the code blocks (50) represent entropy-encoded versions of transformation coefficient blocks (52, 54) of the sub bands, the apparatus comprising:
a means (68) for - for a first and second one of the images, respectively - for image unit regions into which the respective image is divided according to a respective spatial resolution - adding the lengths of those code blocks (50) relating to an image section (56, 58) according to the wavelet transformation (26) that overlaps with the respective image unit region, in a manner weighted in dependence on a ratio of the respective image unit region to the respective image section, to acquire, for the image unit regions of the respective image, one added value each as a measure for a local entropy; and
a means (70) for calculating the measure for the change in dependence on the added values.

2. Apparatus according to claim 1, wherein the means (70) for calculating is implemented to determine, in spatial resolution, the change by location-dependent determination of a deviation between the added values between the images.

3. Apparatus according to claim 1 or 2, wherein the images are encoded with different data rates and the means (70) for calculating is implemented to consider the data rate difference in the calculation.

4. Apparatus according to one of the previous claims, wherein the apparatus is implemented to determine, in spatial resolution, the change by location-dependent comparison (70) of the lengths of the code blocks (50) of the images.

5. Apparatus according to claim 4, wherein the apparatus is implemented to decode, at locations where the change exceeds a predetermined measure, those code blocks (50) that are allocated to sections (56, 58) comprising at least one of these locations, and to perform a comparison between sections of images reconstructed from the decoded code blocks (50) to acquire changes between the individual images or between the images in the sequence of images in a fme spatial resolution.

6. Apparatus according to one of claims 1 to 5, wherein the images are part of a video and the apparatus is part of a video surveillance apparatus (80), wherein the apparatus is configured to cause that at locations where the change exceeds a predetermined threshold, those code blocks are decoded that are allocated to sections comprising at least one of these locations, and object search or object tracking is performed in sections reconstructed from the decoded code blocks.

7. Apparatus according to one of claims 1 to 5, wherein the images are part of an image sequence and the apparatus is part of a noise reduction apparatus, wherein the apparatus is configured to cause that at locations where the change falls below a predetermined threshold, those code blocks are decoded that are allocated to sections comprising at least one of these locations, and time averaging is performed across sections reconstructed from the decoded code blocks.

8. Apparatus according to one of claims 1 to 5, wherein the images are part of an image sequence and the apparatus is part of a transcoding apparatus (100) for transcoding the image sequence from an input quality to a reduced output quality, wherein the apparatus is configured to cause that at locations where the change falls below a predetermined threshold, those code blocks that are allocated to sections comprising at least one of these locations are subject to a quality reduction.

9. Apparatus according to one of claims 1 to 5, wherein the images are part of an image sequence and the apparatus is part of a transcoding apparatus (100) for transcoding the image sequence from an input quality to a reduced output quality, wherein the apparatus is configured to cause that at locations where the deviation exceeds a predetermined threshold, those code blocks relating to one of these locations according to the wavelet information are subject to a quality reduction, for example by cutting off ends of the respective code blocks.

10. Apparatus according to one of the previous claims, wherein the images are part of an image sequence and the apparatus is implemented to detect a scene change in the image sequence based on the change.

11. Apparatus according to one of the previous claims, wherein the apparatus is implemented to check whether the detected change exceeds a predetermined measure and to trigger a notification of a user about the change, a display of the change, a start of a recording or a data storage in response to the check having the result that the detected change exceeds the predetermined measure.

12. Method for detecting a change between individual images or between images in a sequence of images that are each individually entropy-encoded to code blocks of variable lengths, which are allocated to different sections of the respective image, wherein in the method for detecting the change a measure for the change is used that depends on a length of the code blocks of the images,
wherein the images are encoded in a manner divided into sub bands (32, 34, 36, 39, 42, 44, 46) of different transformation stages by means of a wavelet transformation (26), and the code blocks (50) represent entropy-encoded versions of transformation coefficient blocks (52, 54) of the sub bands, the method comprising:
for a first and second one of the images, respectively, for image unit regions into which the respective image is divided according to a respective spatial resolution, adding the lengths of those code blocks (50) relating to an image section (56, 58) according to the wavelet transformation (26) that overlaps with the respective image unit region, in a manner weighted in dependence on a ratio of the respective image unit region to the respective image section, to acquire, for the image unit regions of the respective image, one added value each as a measure for a local entropy; and
calculating the measure for the change in dependence on the added values.

13. Computer program having a program code for performing a method according to claim 12, when the same is executed by a processor.

## Revendications

1. Dispositif permettant de détecter un changement entre images individuelles ou entre images dans une séquence d'images (20) qui sont, chacune, codées de manière entropique individuellement pour obtenir des blocs de codes (50) de longueur variable associés à des segments différents (56, 58) des images respectives, le dispositif étant réalisé pour utiliser, pour détecter le changement, une mesure du changement qui est fonction d'une longueur des blocs de codes (50) des images,
dans lequel les images sont codées de manière décomposée en sous-bandes (32, 34, 36, 39, 42, 44, 46) d'étapes de transformation différentes au moyen d'une transformation d'ondelettes (26), et les blocs de codes (50) représentent des versions codées de manière entropique de blocs de coefficients de transformation (52, 54) des sous-bandes, le dispositif présentant les caractéristiques suivantes:
un moyen (68) destiné à additionner - pour chaque fois une première et une deuxième des images - pour les zones d'unité d'image dans lesquelles l'image respective est subdivisée selon une résolution locale respective - les longueurs des blocs de codes (50) qui se réfèrent, selon la transformation d'ondelettes (26), à un segment d'image (56, 58) qui vient en recouvrement avec la zone d'unité d'image respective de manière pondérée en fonction d'un rapport entre la zone d'unité d'image respective et le segment d'image respectif, pour obtenir, pour les zones d'unité d'image de l'image respective, une valeur additionnée comme mesure d'une entropie locale; et
un moyen (70) destiné à calculer la mesure de changement en fonction des valeurs additionnées.

2. Dispositif selon la revendication 1, dans lequel le moyen (70) destiné à calculer est réalisé pour déterminer, à résolution locale, le changement par détermination en fonction de l'endroit d'un écart entre les valeurs additionnées entre les images.

3. Dispositif selon la revendication 1 ou 2, dans lequel les images sont codées à des débits de données différents, et le moyen (70) destiné à calculer est réalisé pour tenir compte, lors du calcul, de la différence entre débits.

4. Dispositif selon l'une des revendications précédentes, dans lequel le dispositif est réalisé pour déterminer le changement à résolution locale par comparaison en fonction de l'endroit (70) des longueurs des blocs de codes (50) des images.

5. Dispositif selon la revendication 4, dans lequel le dispositif est réalisé pour décoder, aux endroits auxquels le changement excède une mesure prédéterminée, les blocs de codes (50) associés à des segments (56, 58) qui comportent au moins l'un de ces endroits, et pour effectuer une comparaison entre les segments des images reconstruits à partir des blocs de codes (50) décodés, pour obtenir, en résolution locale fine, les changements entre les images individuelles ou entre les images dans la séquence d'images.

6. Dispositif selon l'une des revendications 1 à 5, dans lequel les images font partie d'une vidéo et le dispositif fait partie d'un dispositif de surveillance vidéo (80), dans lequel le dispositif est configuré pour faire que soient décodés, aux endroits auxquels le changement excède un seuil prédéterminé, les blocs de codes associés à des segments comportant au moins l'un de ces endroits et soit réalisé(e) une recherche d'objet ou un dépistage d'objet dans les segments reconstruits à partir des blocs de codes décodés.

7. Dispositif selon l'une des revendications 1 à 5, dans lequel les images font partie d'une séquence d'images et le dispositif fait partie d'un dispositif de réduction de bruit, dans lequel le dispositif est configuré pour faire que soient décodés, aux endroits auxquels le changement descend au-dessous d'un seuil prédéterminé, les blocs de codes associés à des segments qui comportent au moins l'un de ces endroits et que soit effectué l'établissement d'une moyenne temporelle sur les segments reconstruits à partir des blocs de codes décodés.

8. Dispositif selon l'une des revendications 1 à 5, dans lequel les images font partie d'une séquence d'images et le dispositif fait partie d'un dispositif de transcodage (100) destiné à transcoder la séquence d'images d'une qualité d'entrée à une qualité de sortie réduite, pour faire que, aux endroits auxquels le changement descend au-dessous d'un seuil prédéterminé, les blocs de codes associés à des segments qui comportent au moins l'un de ces endroits soient soumis à une réduction de qualité.

9. Dispositif selon l'une des revendications 1 à 5, dans lequel les images font partie d'une séquence d'images et le dispositif fait partie d'un dispositif de transcodage (100) destiné à transcoder la séquence d'images d'une qualité d'entrée à une qualité de sortie réduite, dans lequel le dispositif est configuré pour faire que, aux endroits auxquels l'écart excède un seuil prédéterminé, les blocs de codes qui se référent, selon la transformation d'ondelettes, à l'un de ces endroits soient soumis à une réduction de qualité, par exemple en coupant les extrémités des blocs de codes respectifs.

10. Dispositif selon l'une des revendications précédentes, dans lequel les images font partie d'une séquence d'images et le dispositif est réalisé pour détecter un changement de scène dans la séquence d'images sur base du changement.

11. Dispositif selon l'une des revendications précédentes, dans lequel le dispositif est réalisé pour vérifier si le changement détecté excède une mesure prédéterminée et, en réponse au fait que la vérification a pour résultat que le changement détecté excède la mesure prédéterminée, pour déclencher une notification à l'utilisateur sur le changement, un affichage du changement, un début d'une prise de vue ou une mémorisation de données.

12. Procédé permettant de détecter un changement entre images individuelles ou entre images dans une séquence d'images codées, chacune, de manière entropique pour obtenir des blocs de codes de longueur variable associés à des segments différents de l'image respective, dans le procédé permettant de détecter le changement étant utilisée une mesure du changement qui est fonction d'une longueur des blocs de codes des images,
dans lequel les images sont codées de manière décomposée en sous-bandes (32, 34, 36, 39, 42, 44, 46) d'étapes de transformation différentes au moyen d'une transformation d'ondelettes (26), et les blocs de codes (50) représentent des versions codées de manière entropique de blocs de coefficients de transformation (52, 54) des sous-bandes, le procédé présentant les étapes suivantes consistant à:
pour chaque fois une première et une deuxième des images, pour des zones d'unité d'image dans lesquelles l'image respective est subdivisée selon une résolution locale respective, additionner les longueurs des blocs de codes (50) qui se référent, selon la transformation d'ondelettes (26), à un segment d'image (56, 58) qui vient en recouvrement avec la zone d'unité d'image respective de manière pondérée en fonction d'un rapport entre la zone d'unité d'image respective et le segment d'image respectif, pour obtenir, pour les zones d'unité d'image de l'image respective, une valeur additionnée comme mesure d'une entropie locale; et
calculer la mesure du changement en fonction des valeurs additionnées.

13. Programme d'ordinateur avec un code de programme pour réaliser un procédé selon la revendication 12 lorsque ce dernier est exécuté par un processeur.
